# EUROPÄISCHE PATENTSCHRIFT

(11) **EP 2 736 797 B1**
(45) Veröffentlichungstag und Bekanntmachung des Hinweises auf die Patenterteilung: **11.03.2015**
(21) Anmeldenummer: 12743063.5
(22) Anmeldetag: 17.07.2012
(51) Int. Cl.: B62K 15/00, B62K 19/18, F16B 7/04

(54) **KLAPPVORRICHTUNG MIT VERRIEGELUNG**
FOLDING DEVICE WITH LOCKING MEANS
DISPOSITIF PLIANT AVEC VERROUILLAGE

(30) Priorität: 26.07.2011 DE 102011052134
(43) Veröffentlichungstag der Anmeldung: 04.06.2014
(73) Patentinhaber: Bettin, Karsten, 30173 Hannover (DE)
(72) Erfinder: Bettin, Karsten, 30173 Hannover (DE)
(86) Internationale Anmeldenummer: PCT/DE2012/100216
(87) Internationale Veröffentlichungsnummer: WO 2013/013667

(56) Entgegenhaltungen:
- CN-U- 201 520 377
- CN-U- 201 559 768
- CN-U- 201 580 496
- CN-U- 201 626 517
- CN-U- 201 626 519
- CN-U- 201 777 358
- CN-U- 201 800 843
- CN-Y- 201 254 246
- TW-A- 200 808 608
- TW-U- M 291 476

## Beschreibung

### Technisches Gebiet

Die Erfindung betrifft eine Klappvorrichtung mit Verriegelung gemäß dem Oberbegriff des Anspruchs 1, wahlweise zur Verbindung von zwei Rahmenteilen oder zur Verbindung von zwei Lenkstangenabschnitten.

### Stand der Technik

Die Beschreibung des Standes der Technik nimmt Bezug auf Klappvorrichtungen, in denen zwei im Folgenden als A und B bezeichnete Teile auf einer ihrer Seiten drehbar miteinander verbunden sind, während auf der anderen Seite ein Verriegelungsmechanismus vorgesehen ist, der nur auf dieser Seite wirkt und die beiden Teile A und B gegeneinander verspannt. Dabei nimmt die Erfindung auf diejenigen Ausführungsformen Bezug, die zum Zweck der Verriegelung auf der Seite des Verriegelungsmechanismus innerhalb eines Teiles, im Folgenden innerhalb des Teiles A, eine Achse vorgesehen haben, auf der drehbar eine Verriegelungsgruppe mit Elementen zur Verriegelung angeordnet ist, wobei die beiden Teile A und B durch Drehung eines Verriegelungshebels, der Teil der Verriegelungsgruppe ist, gegeneinander verspannt werden. Die Verriegelungsgruppe stützt sich dabei an der in dem Teil A angeordneten Achse, auf der sie drehbar gelagert ist, ab und drückt oder zieht das Teil B gegen das Teil A. Schließlich nimmt die Erfindung auf alle Ausführungsformen Bezug, die eine exzentrisch zur Drehachse der Verriegelungsgruppe verlaufende Klemmfläche aufweisen, gegen die die Teile A und B miteinander verspannt werden.

In US 6 523 223 B2, US 7 198 281 B2, WO 2009 / 152 768 A1 und in der ersten Ausführungsform zu CN 201 626 517 U weist der Verriegelungshebel die exzentrisch zu seiner eigenen Drehachse verlaufende Klemmfläche auf.

Nachteilig an diesen Ausführungsformen ist, dass der Verriegelungsmechanismus zwei verschiedene Drehachsen, nämlich die Drehachse des Verriegelungshebels und die davon verschiedene Drehachse der Verriegelungsgruppe aufweist. Beide Drehgelenke müssen in entsprechender Festigkeit ausgeführt werden und erfordern eine Vielzahl von Bauelementen. Nachteilig ist darüber hinaus, dass der Druck, den die exzentrische Klemmfläche des Verriegelungshebels auf das Teil B ausübt, konstruktionsbedingt nicht oder nur in engen Grenzen unabhängig vom Schließwinkel des Verriegelungshebels einstellbar ist.

Nachteilig an der Ausführungsform in WO 2009 / 152 768 A1 ist außerdem, dass die von der exzentrischen Zylindermantelfläche ausgeübte Kraft nicht direkt, sondern über das zusätzliche Verriegelungselement seitlich auf das Teil B wirkt.

In WO 2007 / 113 179 A1 weist der Verriegelungshebel ebenfalls die exzentrisch zu seiner eigenen Drehachse verlaufende Klemmfläche auf. Nachteilig ist, dass der Abstand zwischen der Drehachse des Verriegelungshebels und dem Bolzen im Verriegelungszustand nicht einstellbar ist und damit die vom Verriegelungshebel auf das Teil B wirkende Kraft direkt abhängig vom Schließwinkel des Verriegelungshebels ist.

In CN 201 580 496 U enthält die Verriegelungsgruppe ein Klemmelement, das sich über einen Rundbolzen am Teil B abstützt und sich um den Rundbolzen dreht und eine zu dieser Drehachse exzentrisch verlaufende Klemmfläche aufweist. Das Klemmelement ist im Verriegelungshebel drehbar angeordnet.

Nachteilig ist wiederum, dass die Verriegelungsgruppe zwei Drehachsen aufweist, nämlich die Drehachse des Klemmelementes und die davon verschiedene Drehachse der Verriegelungsgruppe, die beide in entsprechender Festigkeit ausgeführt werden müssen und eine Vielzahl von Bauelementen erfordern.

In CN 201 559 768 U ist ein Klemmelement drehbar im Teil B angeordnet und weist die zur Drehachse der Verriegelungsgruppe exzentrisch verlaufende Klemmfläche auf. Auch hier ist nachteilig, dass zwei Drehachsen erforderlich sind, die in entsprechender Festigkeit auszuführen sind, nämlich die im Teil B angeordnete Drehachse des Klemmelementes und die davon verschiedene im Teil A angeordnete Drehachse der Verriegelungsgruppe.

Aus CN 201 626 519 U, CN 201 254 246 Y auf der der Oberbegriff von Anspruch 1 basiert, und aus der zweiten Ausführungsform aus CN 201 626 517 U sind Klappvorrichtungen bekannt, bei denen das Teil B auf der Seite des Verriegelungsmechanismus eine zur Drehachse der Verriegelungsgruppe exzentrisch verlaufende, fest im Teil B angeordnete Klemmfläche aufweist, wobei der Verriegelungsmechanismus nur eine Drehachse aufweist und die Drehung der Verriegelungsgruppe um ihre Achse eine zunehmende Verspannung zwischen dem Teil A und dem Teil B erzeugt.

Nachteilig an diesen Ausführungsformen ist jedoch,
a. dass der Krümmungsradius der Klemmfläche und die zur Klemmung nutzbare Breite der Klemmfläche konstruktionsbedingt so klein sind, dass der nutzbare Klemmweg, d. h. der Winkel, den der Verriegelungshebel von der ersten Berührung des Teiles B bis zum verspannten Zustand zurücklegt, sehr klein ist, was hohe Anforderungen an die exakte radiale Positionierung der Klemmfläche zur Drehachse des Verriegelungshebels mittels der vorhandenen Einstellschrauben und an die Fixierung der verklemmten Position des Verriegelungshebels stellt. Der Schließwinkel des Verriegelungshebels muss im verspannten Zustand sehr genau eingestellt und durch Sicherungen und Anschläge fixiert werden, um die erforderliche Verspannung zwischen den Teilen A und B zu erreichen und zu erhalten. Damit kann der Verriegelungshebel auch nicht über den Punkt der höchsten Verspannung hinaus bewegt werden, um eine selbstsichernde Stellung zu erreichen, da ansonsten die Klemmkraft erheblich nachlassen würde,
b. dass die Teile A und B in ihrer Mitte konstruktionsbedingt zusätzliche Erhebungen und gegengleiche Vertiefungen aufweisen, um die Teile A und B im zusammengeklappten Zustand genau genug zueinander positionieren zu können und ein gegenseitiges Verschieben der Teile A und B zu ihrer gemeinsamen Drehachse und/oder orthogonal zu ihrer gemeinsamen Drehachse zu verhindern. Dies hat den Nachteil, dass die Teile A und B konstruktionsbedingt jeweils eine Platte aufweisen müssen, die die auf der einen Seite angeordnete Drehachse der Klappvorrichtung mit den auf der gegenüberliegenden Seite angeordneten Klemmelementen verbindet (gilt auch für CN 201 580 496 U, CN 201 559 768 U),
c. dass die Teile A und B auf der Seite des Verriegelungsmechanismus im zusammengeklappten Zustand konstruktionsbedingt nicht ineinander greifen und dass demzufolge der Verriegelungshebel die gegenseitige Verschieblichkeit der Teile A und B in Richtung ihrer gemeinsamen Drehachse auf dieser Seite dadurch verhindert muss, dass der Verriegelungshebel an beiden Seiten zwei Arme mit Stirnflächen aufweist, die einen Arm des Teiles B umschließen und damit die Beweglichkeit des Teiles B zum Teil A in Richtung ihrer gemeinsamen Drehachse auf der Seite der Klemmflächen der Klappvorrichtung verhindern, wodurch aber axiale Toleranzen der Lagerung des Verriegelungshebels zu Instabilitäten der Klemmverbindung führen können (gilt auch für CN 201 559 768 U).

In CN 201 626 519 U und in der zweiten Ausführungsform zu CN 201 626 517 U ist im Teil B ein gesondertes Klemmelement mit einem Rundkopf, der als Klemmfläche fungiert, angeordnet. Nachteilig an dieser Ausführung ist zusätzlich, dass die Verspannung zwischen den Teilen A und B nur durch Punktberührung der Klemmelemente erfolgt und die Gefahr besteht, dass die beiden Klemmelemente der Verspannung durch leichte Seitwärtsbewegungen ausweichen.

Die beiden Ausführungsformen der in CN 201 626 517 U dargestellten Klappvorrichtungen dienen der Verbindung von Rohren mit kreisförmigem oder zumindest ovalem Querschnitt. Sie sind daher nicht zur Verbindung von Teilen mit kastenförmigen Profilen geeignet. In beiden Ausführungsformen zu CN 201 626 517 weisen die Teile A und B an ihrem Umfang zusätzlich hochstehende Wandungen auf, die eine gegenseitige Bewegung der Teile A und B orthogonal zu ihrer Drehachse begrenzen. Dies erfordert wiederum, dass die Teile A und B konstruktionsbedingt jeweils eine Platte aufweisen müssen, die die auf der einen Seite angeordnete Drehachse der Klappvorrichtung mit den auf der gegenüberliegenden Seite angeordneten Klemmelementen verbindet.

### Darstellung der Erfindung

Aufgabe der Erfindung ist es, eine Klappvorrichtung mit einer exzentrisch zur Drehachse der Verriegelungsgruppe angeordneten Klemmfläche, die bei Drehung der Verriegelungsgruppe um ihre Achse eine zunehmende Verspannung zwischen dem Teil A und dem Teil B erzeugt, ohne die oben genannten Nachteile zu entwickeln, also eine Klappvorrichtung,
a. die einen möglichst großen Klemmweg aufweist,
b. bei der der Schließwinkel des Verriegelungshebels und die Kraft, mit der die exzentrische Klemmfläche die Verspannung erzeugt, unabhängig voneinander einstellbar sind,
c. bei der der Verriegelungsmechanismus nur eine Drehachse aufweist,
d. bei der zur Positionierung der Teile A und B zueinander keine zusätzlichen Erhebungen und Vertiefungen in der Mitte der Teile A und B erforderlich sind und
e. bei der die exakte Positionierung der Teile A und B zueinander nicht von der Ausführung und Positionierung des Verriegelungshebels abhängig ist.

Zur Lösung dieser Aufgabe bei einer gattungsgemäßen Klappvorrichtung dienen die kennzeichnenden Merkmale des Anspruchs 1.

Weitere vorteilhafte Ausgestaltungen der Erfindung ergeben sich aus den Unteransprüchen.

Wesentliche Vorteile der Erfindung bestehen darüber hinaus darin,
a. dass die Teile A und B identisch ausgeführt werden können.
b. dass die Teile A und B aus einem identischen stranggepressten Profil hergestellt werden können.
c. dass die Klappvorrichtung aus wenigen, einfach herzustellenden Teilen zusammengesetzt ist.
d. dass die zu verbindenden Teile nicht parallel zueinander und auch nicht orthogonal zur Drehachse der Klappvorrichtung stehen müssen.
e. dass die Klappvorrichtung sowohl zur Verbindung von Rohren mit runden, als auch zur Verbindung von Rohren mit eckigen Profilen verwendet werden kann.

### Kurze Beschreibung der Zeichnungen

Fig. 1 zeigt in einer Draufsicht und in einer Ansicht ein Ausführungsbeispiel der Klappvorrichtung mit Verriegelung für zwei rohrförmige Lenkstangenabschnitte 1 und 2, die über ein Klappgelenk miteinander verbunden sind, im geöffneten Zustand.
Fig. 2 zeigt in der Draufsicht die Schritte zur Verriegelung der geschlossenen Klappvorrichtung vom in Fig. 2.1 geöffneten Zustand der Verriegelungsgruppe bis zum verriegelten Zustand in Fig 2.5.
Fig. 3 zeigt verschiedene Ansichten der Klappvorrichtung aus Fig. 1 im geschlossenen und verriegelten Zustand.
Fig. 4 zeigt eine Ansicht einer weiteren bevorzugten Ausführungsform der Klappvorrichtung mit Verriegelung mit zwei gesonderten Gelenkelementen, einem Stützelement und einem Klemmelement, die mit zwei Rahmenteilen verbunden sind, wobei die beiden Rahmenteile nicht rechtwinklig zur Drehachse des Klappgelenkes ausgerichtet sind.

### Bester Weg zur Ausführung der Erfindung und bevorzugte Ausführungsformen

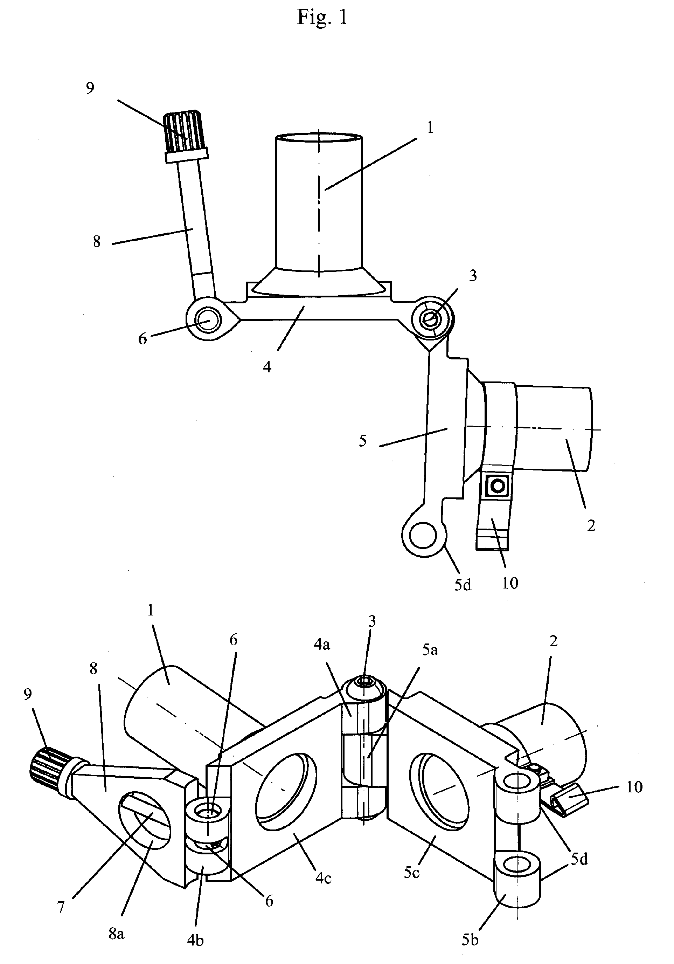

Fig. 1 zeigt in einer Draufsicht und in einer Ansicht ein Ausführungsbeispiel der Klappvorrichtung mit Verriegelung für zwei rohrförmige Lenkstangenabschnitte 1 und 2, die über ein Klappgelenk miteinander verbunden sind, im geöffneten Zustand.

Die Klappvorrichtung weist zwei über eine Drehachse 3 drehbeweglich verbundene Elemente 4 und 5 auf, die auf der einen Seite des Lenkstangenabschnittes als Gelenkelemente 4a und 5a ausgebildet sind und die auf der den Gelenkelementen gegenüber liegenden Seite der Lenkstangenabschnitte 1 und 2 als Stützelement 4b und als Klemmelement 5b ausgebildet sind. In diesem Ausführungsbeispiel bilden die Gelenkelemente 4a beziehungsweise 5a und das Stützelement 4b beziehungsweise das Klemmelement 5b zusammen mit einer Platte 4c beziehungsweise 5c jeweils ein einstückig hergestelltes Bauteil 4 beziehungsweise 5, das mit dem jeweiligen Lenkstangenabschnitt 1 beziehungsweise 2 verbunden ist. Mit dem Stützelement 4b ist drehbeweglich eine Verriegelungsgruppe verbunden, die folgende Bestandteile enthält:
a. eine in einer runden Ausnehmung des Stützelementes 4b drehbeweglich angeordnete Rundmutter 6,
b. einen in die Rundmutter 6 eingeschraubten Gewindestab 7, der an seinen beiden Enden je ein Gewinde aufweist,
c. ein auf den Gewindestab 7 aufgestecktes Druckstück 8, das eine für den Gewindestab 7 bestimmte Ausnehmung aufweist,
d. eine auf den Gewindestab 7 aufgeschraubte Einstellmutter 9.

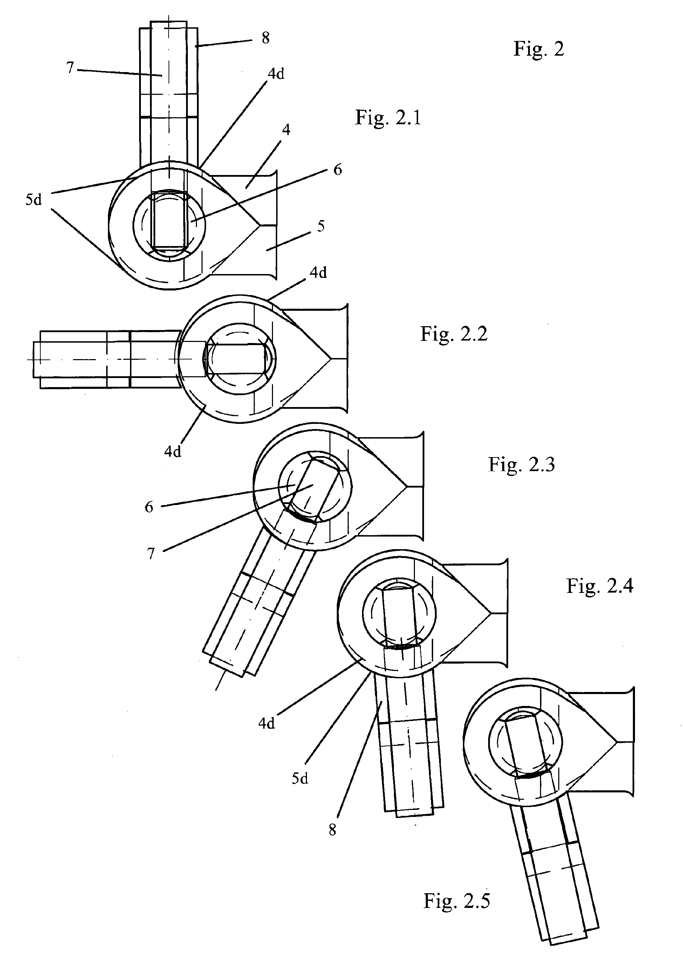

Fig. 2 zeigt in der Draufsicht die Schritte zur Verriegelung der Klappvorrichtung vom geöffneten Zustand in Fig. 2.1 bis zum verriegelten Zustand in Fig 2.5. Aus Gründen der übersichtlicheren Darstellung ist das Gewinde zwischen der Rundmutter 6 und dem Gewindestab 7 nur in Fig. 2.1 dargestellt.

Das Element 5 weist eine gekrümmte, exzentrisch zur Drehachse der Verriegelungsgruppe angeordnete, in Fig. 1 und Fig.2 als Zylindermantelfläche ausgeprägte Klemmfläche 5d auf. Im geöffneten Zustand hält das Druckstück 8 Kontakt zu der Zylindermantelfläche 4c des Stützelementes 4b (Fig. 2.1). Durch Drehen der Verriegelungsgruppe wird dieser Kontakt aufgehoben (Fig. 2.2). Wird die Verriegelungsgruppe weiter gedreht, kommt das Druckstück 8 in Kontakt mit der Klemmfläche 5d des Klemmelementes 5b (Fig. 2.3). Durch weiteres Drehen wird das Druckstück 8 gegen die Klemmfläche 5d verspannt, wobei Fig. 2.4 die größtmögliche Verspannung zeigt. Der Gewindestab liegt hier auf der die Drehachse der Verriegelungsgruppe und die Mittelachse der Klemmfläche 5d verbindenden Linie. Wird die Verriegelungsgruppe nun noch etwas weiter gedreht, wie in Fig. 2.5, so tendiert die Bewegung der Verriegelungsgruppe gegen den Lenkstangenabschnitt nach innen, wodurch bereits eine selbstsichernde Verriegelung entsteht.

Der Vorteil dieser Anordnung besteht darin, dass der Abstand der Mittelachsen der Zylindermantelflächen von Stützelement 4b und Klemmelement 5b so klein ist, dass das Druckstück 8 sehr früh mit dem Klemmelement 5b in Kontakt kommt und damit ein langer Klemmweg zur Verspannung genutzt werden kann.

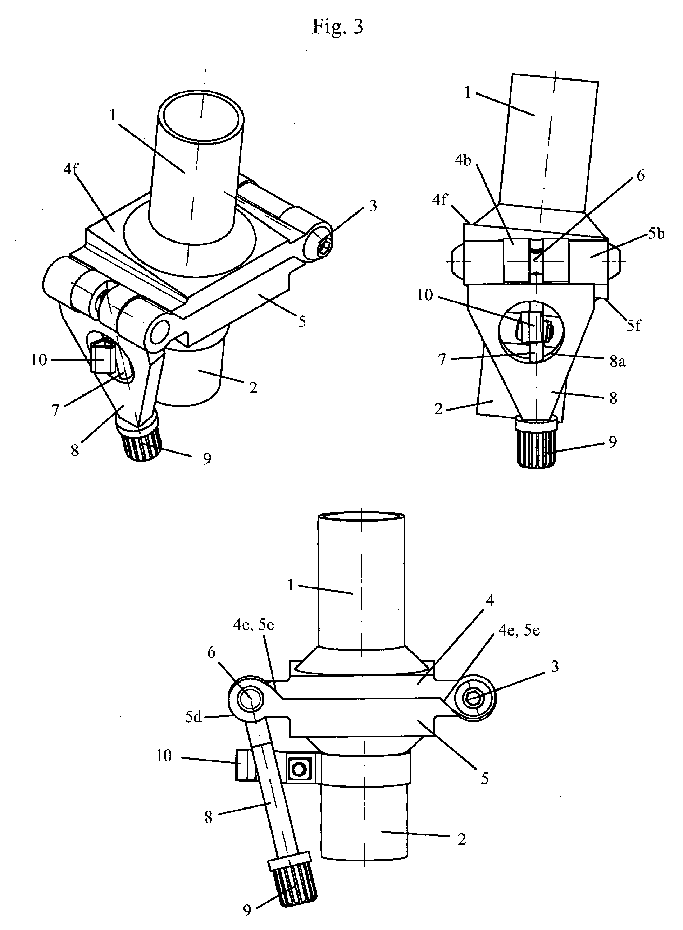

Fig. 3 zeigt verschiedene Ansichten der Klappvorrichtung im geschlossenen Zustand. Zur weiteren Sicherung der Verriegelungsgruppe gegen unbeabsichtigtes Verdrehen weist das Druckstück 8 nach einem weiteren besonderen Merkmal der Erfindung eine Bohrung 8a auf, so dass der Gewindestab 7 in einem Teilbereich offen liegt, womit ein Sicherungselement 10, hier eine mit dem Lenkstangenabschnitt 2 verbundene, an ihrem Ende hakenförmig ausgebildete Blattfeder, um den Gewindestab 7 greifen kann und die Verriegelungsgruppe gegen Verdrehen sichert.

Mit der Einstellmutter 9 kann nach einem besonderen Merkmal der Erfindung im geöffneten Zustand der gewünschte Abstand zwischen Druckstück 8 und Rundmutter 6 und damit die im verriegelten Zustand gewünschte Spannung zwischen dem Druckstück 8 und dem Klemmelement 5b eingestellt werden.

Nach einem weiteren besonderen Merkmal der Erfindung weist das Element 5 zwei zu beiden Seiten des Gewindestabes 7 angeordnete Klemmflächen 5d auf, so dass das Druckstück 8, das sich an der Einstellmutter 9 abstützt, zu beiden Seiten Druck auf das Klemmelement 5b ausübt.

Nach einem besonderen Merkmal der Erfindung sind die Elemente 4 und 5aus demselben stranggepressten Profil hergestellt, wobei bereits das stranggepresste Profil die runden Ausnehmungen zur Aufnahme der Gelenkachse und der Rundmutter 9, die exzentrisch zur Gelenkachse angeordnete, als Zylindermantelfläche ausgeprägte Klemmfläche 5d sowie die entsprechend ausgeprägte Zylindermantelfläche 4d aufweist. Dies ermöglicht eine besonders kostengünstige Produktion der Klappvorrichtung.

Aus Fig. 3 ist die kostengünstige Weiterbearbeitung der stranggepressten Profile zur Herstellung der Klappvorrichtung ersichtlich: Nachdem die stranggepressten Profile auf Länge zugeschnitten wurden, sind Ausnehmungen vorzusehen, in die die entsprechenden Gegenstücke passen.

Durch entsprechenden Zuschnitt kann eine zur Strangpressrichtung und damit zur Gelenkachse 3 nicht parallele Fläche 4e beziehungsweise 5e erzeugt werden, die mit den Lenkstangenabschnitten lotrecht zu deren Achse (gegebenenfalls unterstützt durch eine auf den Flächen 4e beziehungsweise 5e angesetzte Zentrierbohrung) stoffschlüssig verbunden wird. Die gewünschte Klapprichtung wird durch die Ausrichtung der schrägen Fläche 4e beziehungsweise 5e eingestellt.

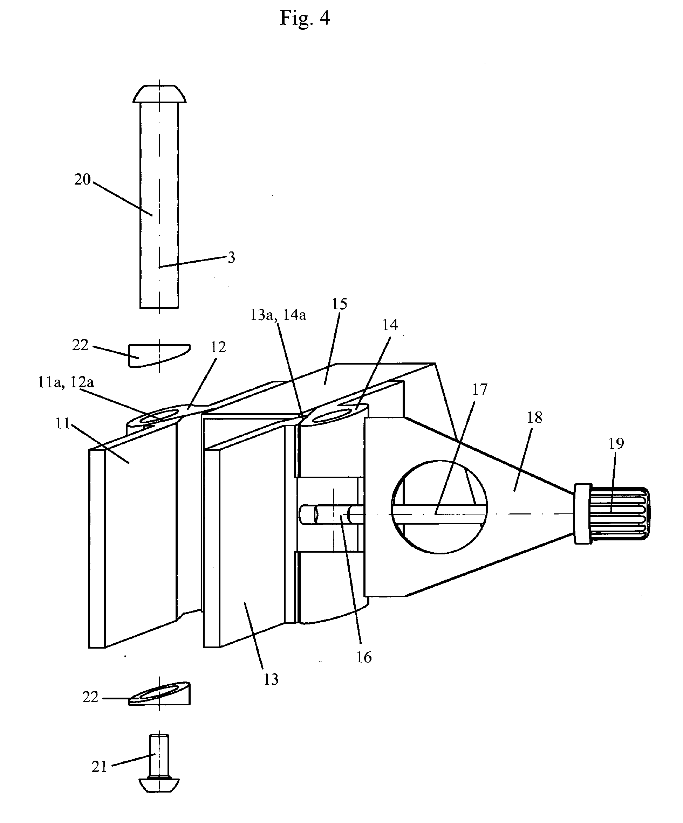

Fig. 4 zeigt eine Ansicht einer weiteren bevorzugten Ausführungsform der Klappvorrichtung mit Verriegelung mit zwei Gelenkelementen 11 und 12, einem gesonderten Stützelement 13 und einem gesonderten Klemmelement 14, die mit zwei Rahmenteilen, von denen hier ein Rahmenteil 15 angedeutet ist, verbunden sind.

Auch in dieser Ausführungsform sind Stütz-, Klemm- und Gelenkelemente 11, 12, 13 und 14 aus einem identischen stranggepressten Profil hergestellt. Nach einem weiteren besonderen Merkmal der Erfindung sind in Fig. 4 die stranggepressten Stütz-, Klemm- und Gelenkelemente 11, 12, 13 und 14 in einem nicht senkrechten Winkel zur Drehachse 3 der Klappvorrichtung zugeschnitten. Die Oberseite des Rahmenteils 15 verläuft parallel zur Schnittfläche der stranggepressten Elemente. Damit können die Rahmenteile nach einem weiteren besonderen Merkmal der Erfindung auch nichtrechtwinklig verlaufend zur Drehachse 3 des Klappgelenkes angeordnet werden. Die Drehachse 3 für das Klappgelenk wird durch einen mit einem Schraubenkopf und einem Innengewinde versehenen Bolzen 20 gebildet, der mit einer Schraube 21 verschraubt ist. Um die Drehung der zur Drehachse schiefen Ebenen der Gelenkelemente 11 und 12 zu ermöglichen, sind zwischen den schiefen Ebenen und dem Bolzen 20 beziehungsweise der Schraube 21 entsprechend abgeschrägte Unterlegscheiben 22 angeordnet.

## Patentansprüche

1. Klappvorrichtung mit Verriegelung,
für ein Fahrrad, wahlweise zur Verbindung von zwei Rahmenteilen (15) oder zur Verbindung von zwei Lenkstangenabschnitten (1) und (2),
enthaltend
a. ein drehbewegliches Gelenk mit zwei um eine gemeinsame Achse (3) drehbeweglichen Gelenkelementen (4a, 5a; 11, 12),
b. eine auf der dem Gelenk gegenüberliegenden Seite der Rahmenteile (15) oder der Lenkstangenabschnitte (1,2) angeordnete Klemmverbindung mit einem Stützelement (4b), einer Verriegelungsgruppe, die mit dem Stützelement (4b) drehbar verbunden ist, und einem Klemmelement (5b), wobei entweder die Gelenkelemente (12), das Stützelement und das Klemmelement (14) als gesonderte Teile mit dem Rahmenteil (15) oder mit dem Lenkstangenabschnitt verbunden sind oder das Stützelement (4b) und das Klemmelement (5b) bilden jeweils zusammen mit jeweils einem Gelenkelement (4a, 5a) und einer Platte (4c, 5c) jeweils ein einstückig hergestelltes Bauteil (4, 5), das mit dem Rahmenteil (15) oder dem Lenkstangenabschnitt (1, 2) verbunden ist,
wobei das Klemmelement (5b) im Verriegelungszustand wenigstens eine zur Drehachse der Verriegelungsgruppe nichtzentrische, nach außen gewölbte, zylindrische Klemmfläche (5d) aufweist und die Form der Krümmung der Klemmfläche dazu führt, dass die Verriegelungsgruppe, die sich an dem Stützelement (4b) abstützt, durch ihre drehende Schließbewegung mit der Klemmfläche (5d) in Kontakt kommt und im Verriegelungszustand eine Kraft auf diese Klemmfläche (5d) ausübt und damit beide Rahmenteile oder Lenkstangenabschnitte gegeneinander verspannt,
**dadurch gekennzeichnet, dass** die verlängerte Drehachse der Verriegelungsgruppe im verriegelten Zustand der Klappvorrichtung innerhalb des durch den Krümmungsradius der Klemmfläche (5d) beschriebenen Kreises liegt.

2. Klappvorrichtung nach Anspruch 1, **dadurch gekennzeichnet, dass** die Verriegelungsgruppe enthält:
a. eine in einer runden Ausnehmung des Stützelementes (4b) drehbeweglich angeordnete Rundmutter (6),
b. einen in die Rundmutter eingeschraubten Gewindestab (7), der an seinen beiden Enden je ein Gewinde aufweist,
c. ein auf den Gewindestab (7) aufgestecktes und eine für den Gewindestab (7) bestimmte Ausnehmung aufweisendes Druckstück (8),
d. eine auf den Gewindestab (7) aufgeschraubte Einstellmutter (9),
wobei das Klemmelement (5b) zwei Klemmflächen (5d) aufweist, von denen eine oberhalb und eine unterhalb des Gewindestabes (7) angeordnet ist und wobei die Einstellmutter (9) im Verriegelungszustand eine Kraft auf das Druckstück (8) ausübt, das wiederum eine Kraft auf die Klemmflächen (5d) des Klemmelementes (5b) ausübt und die beiden Rahmenteile oder Lenkstangenabschnitte (1, 2) gegeneinander verspannt.

3. Klappvorrichtung nach Anspruch 2, **dadurch gekennzeichnet, dass** das Druckstück (8) eine orthogonal zur Drehachse der Verriegelungsgruppe und orthogonal zur Achse des Gewindestabes (7) stehende Bohrung (8a) aufweist, so dass der Gewindestab (7) im Bereich der Bohrung (8a) offen liegt und ein Sicherungselement (10) den Gewindestab (7) im Verriegelungszustand so umgreift, dass die Verriegelungsgruppe im Verriegelungszustand gehalten wird.

4. Klappvorrichtung nach Anspruch 3, **dadurch gekennzeichnet, dass** das Sicherungselement (10) hakenförmig ist.

5. Klappvorrichtung nach Anspruch 3 oder 4, **dadurch gekennzeichnet, dass** das Sicherungselement (10) eine Rückstellfeder aufweist.

6. Klappvorrichtung nach einem der Ansprüche 1 bis 5, **dadurch gekennzeichnet, dass** das Stützelement (4b) und das Klemmelement (5b) aus einem identischen stranggepressten Profil hergestellt sind.

7. Klappvorrichtung nach einem der Ansprüche 1 bis 6, **dadurch gekennzeichnet, dass** beide Gelenkelemente aus einem identischen stranggepressten Profil hergestellt sind.

8. Klappvorrichtung nach einem der Ansprüche 1 bis 7, **dadurch gekennzeichnet, dass** die Gelenkelemente (11, 12), das Stützelement (13) und das Klemmelement (14) aus einem identischen stranggepressten Profil hergestellt sind.

9. Klappvorrichtung nach einem der Ansprüche 1 bis 8, **dadurch gekennzeichnet, dass** beide einstückig hergestellten, wenigstens aus Gelenkelement (4a, 5a), Stütz- oder Klemmelement (4b, 5b) und Platte (4c, 5c) bestehenden Bauteile (4, 5) aus einem identischen stranggepressten Profil hergestellt sind.

## Claims

1. A folding device with locking means,
for a bicycle, optionally for connecting two frame parts (15) or for connecting two steering rod sections (1) and (2),
comprising
a. a rotatable articulation with two articulation elements (4a, 5a; 11, 12) that can rotate about a common axis (3),
b. a clamping connection that is arranged on the side of the frame parts (15) or the steering rod sections (1, 2) opposite the articulation, with a supporting element (4b), a locking group that is rotatably connected to the supporting element (4b), and a clamping element (5b), either the articulation elements (12), the supporting element and the clamping element (14) being connected as separate parts to the frame part (15) or to the steering rod section or the supporting element (4b) and the clamping element (5b) together with in each case one articulation element (4a, 5a) and a plate (4c, 5c) in each case forming a component (4, 5), that has been produced as one piece and that is connected to the frame part (15) or the steering rod section (1, 2),
the clamping element (5b) exhibiting in the locking state at least one outwardly curved, cylindrical clamping surface (5d) that is non-centrally relative to the axis of rotation of the locking group and the shape of the curvature of the clamping surface resulting in that the locking group, which is supported on the supporting element (4b), comes into contact with the clamping surface (5d) as a result of its rotating locking movement and in the locking state exerts a force on this clamping surface (5d) and thus braces both frame parts or steering rod sections relative to each other,
**characterized in that** the extended axis of rotation of the locking group, in the locked state of the folding device, lies inside the circle that is described by the radius of curvature of the clamping surface (5d).

2. The folding device according to Claim 1, **characterized in that** the locking group contains:
a. a round nut (6) that is rotatably arranged in a round recess of the supporting element (4b),
b. a threaded rod (7) that is screwed into the round nut and exhibits a thread each on its two ends,
c. a pressure piece (8) that is plugged onto the threaded rod (7) and exhibits a recess that is intended for the threaded rod (7),
d. a setting nut (9) that is screwed onto the threaded rod (7),
the clamping element (5b) exhibiting two clamping surfaces (5d) of which one is arranged above and one below the threaded rod (7) and where the setting nut (9) in the locked state exerts a force on the pressure piece (8), that in turn exerts a force on the clamping surfaces (5d) of the clamping element (5b) and braces the two frame parts or steering rod sections (1, 2) relative to each other.

3. The folding device according to Claim 2, **characterized in that** the pressure piece (8) exhibits a bore (8a) that is orthogonal to the axis of rotation of the locking group and orthogonal to the axis of the threaded rod (7), so that the threaded rod (7) is exposed in the area of the bore (8a) and a retaining element (10) grips around the threaded rod (7) in the locking state such that the locking group is held in the locking state.

4. The folding device according to Claim 3, **characterized in that** the retaining element (10) has the shape of a hook.

5. The folding device according to Claim 3 or 4, **characterized in that** the locking element (10) exhibits a restoring spring.

6. The folding device according to one of Claims 1 to 5, **characterized in that** the supporting element (4b) and the clamping element (5b) are manufactured from an identical extruded profile.

7. The folding device according to one of Claims 1 to 6, **characterized in that** both articulation elements are manufactured from an identical extruded profile.

8. The folding device according to one of Claims 1 to 7, **characterized in that** the articulation elements (11, 12), the supporting element (13), and the clamping element (14) are manufactured from an identical extruded profile.

9. The folding device according to one of Claims 1 to 8, **characterized in that** both components (4, 5) that are manufactured as one piece and consist at least of the articulation element (4a, 5a), the supporting or clamping element (4b, 5b), and the plate (4c, 5c) are manufactured from an identical extruded profile.

## Revendications

1. Dispositif pliant avec verrouillage,
pour une bicyclette, sélectivement pour le raccordement de deux éléments de cadre (15) ou pour le raccordement de deux sections de guidon (1) et (2),
conprenant :
a. une articulation privotante avec deux éléments d'articulation pivotant (4a, 5a ; 11, 12) autour d'un axe commun (3),
b. un accouplement par serrage disposé sur la face des éléments de cadre (15) ou des sections de guidon (1, 2) en regard de l'articulation comportant un élément de support (4b), un ensemble de verrouillage, qui est raccordé pivotant à l'élément de support (4b), et un élément de serrage (5b), soit les éléments d'articulation (12), l'élément de support et l'élément de serrage (14) étant raccordés en tant que parties distinctes à l'élément de cadre (15) ou à la section de guidon, soit l'élément de support (4b) et l'élément de serrage (5b) formant respectivement un composant (4, 5) réalisé d'une seule pièce conjointement avec respectivement un élément d'articulation (4a, 5a) et une plaque (4c, 5c), qui est lié à l'élément de cadre (15) ou à la section de guidon (1, 2),
dans lequel l'élément de serrage (5b) présente à l'état verrouillé au moins une surface de serrage (5d) cylindrique incurvée vers l'extérieur non centrée par rapport à l'axe de rotation de l'ensemble de verrouillage et la forme de la courbure de la surface de serrage a pour effet que l'ensemble de verrouillage, qui s'appuie sur l'élément de support (4b), vient en contact au moyen de son mouvement de fermeture rotatif avec la surface de serrage (5d) et exerce à l'état verrouillé une force sur cette surface de serrage (5d) et met ainsi les deux éléments de cadre ou sections de guidon en tension l'un contre l'autre,
**caractérisé par le fait que** l'axe de rotation prolongé de l'ensemble de verrouillage se situe, à l'état verrouillé du dispositif pliant, à l'intérieur du cercle décrit par le rayon de courbure de la surface de serrage (5d).

2. Dispositif pliant selon la revendication 1, **caractérisé par le fait que** l'ensemble de verrouillage comprend :
a. un boulon à écrou transversal (6) disposé pivotant dans un évidement rond de l'élément de support (4b),
b. une tige filetée (7) vissée dans le boulon à écrou transversal, qui présente respectivement un filetage à ses deux extrémités,
c. une pièce de pression (8) enfichée sur la tige filetée (7) et présentant un évidement destiné à la tige filetée (7),
d. un écrou de réglage (9) vissé sur la tige filetée (7),
dans lequel l'élément de serrage (5b) présente deux surfaces de serrage (5d), dont une est disposée au-dessus et une en dessous de la tige filetée (7) et dans lequel l'écrou de réglage (9) exerce à l'état verrouillé une force sur la pièce de pression (8), qui exerce à son tour une force sur les surfaces de serrage (5d) de l'élément de serrage (5b) et met ainsi les deux éléments de cadre ou sections de guidon (1, 2) en tension l'un contre l'autre.

3. Dispositif pliant selon la revendication 2, **caractérisé par le fait que** la pièce de pression (8) présente un alésage (8a) orthogonal à l'axe de rotation de l'ensemble de verrouillage et orthogonal à l'axe de la tige filetée (7), de telle sorte que la tige filetée (7) se trouve à découvert dans la zone de l'alésage (8a) et un élément de sécurité (10) enserre la tige filetée (7) à l'état verrouillé de telle manière que l'ensemble de verrouillage est maintenu à l'état verrouillé.

4. Dispositif pliant selon la revendication 3, **caractérisé par le fait que** l'élément de sécurité (10) a la forme d'un crochet.

5. Dispositif pliant selon la revendication 3 ou 4, **caractérisé par le fait que** l'élément de sécurité (10) présente un ressort de rappel.

6. Dispositif pliant selon l'une des revendications 1 à 5, **caractérisé par le fait que** l'élément de support (4b) et l'élément de serrage (14) sont réalisés à partir d'un profilé extrudé identique.

7. Dispositif pliant selon l'une des revendications 1 à 6, **caractérisé par le fait que** les deux éléments d'articulation sont réalisés à partir d'un profilé extrudé identique.

8. Dispositif pliant selon l'une des revendications 1 à 7, **caractérisé par le fait que** les éléments d'articulation (11, 12), l'élément de support (13) et l'élément de serrage (14) sont réalisés à partir d'un profilé extrudé identique.

9. Dispositif pliant selon l'une des revendications 1 à 8, **caractérisé par le fait que** les deux composants (4, 5) réalisés d'une seule pièce, constitués d'au moins un élément d'articulation (4a, 5a), un élément de support ou de serrage (4b, 5b) et une plaque (4c, 5c), sont fabriqués à partir d'un profilé extrudé identique.
